# EUROPÄISCHE PATENTANMELDUNG

(11) **EP 2 202 483 A1**
(43) Veröffentlichungstag der Anmeldung: **30.06.2010**
(21) Anmeldenummer: 09015927.8
(22) Anmeldetag: 23.12.2009
(51) Int. Cl.: G01C 11/00, G01W 1/12, F24J 2/40

(54) **Verfahren zur Ermittlung des energetischen Potenzials der Photovoltaik und/oder der Solarthermie in bebauten Gebieten**

(30) Priorität: 24.12.2008 DE 102008062914
(71) Anmelder: Ludes, Georg, 46284 Dorsten (DE)
(72) Erfinder: Ludes, Georg, 46284 Dorsten (DE)
(74) Vertreter: Schulte & Schulte

(57) **Zusammenfassung**

Ein Verfahren zur Ermittlung des energetischen solarthermischen und/oder photovoltaischen Potentials in bebauten Gebieten sieht vor, dass für das auszuwertende Gebiet Geometriedaten hinsichtlich Größe, Form, Anordnung, Ausrichtung etc. einzelner Gebäude oder Gebäudeteile, der Vegetation oder Topographie aus der Luft erfasst werden, dass die ermittelten Geometriedaten digital eingelesen, ggf. aufbereitet und im Rahmen der elektronischen Datenverarbeitung dahingehend ausgewertet werden, wie die entsprechenden in dem auszuwertenden Gebiet vorhandenen Gebäude zur Aufnahme von Solar- und/Oder Photovoltaikanlagen geeignet sind.

## Beschreibung

Die Erfindung betrifft ein Verfahren zur Ermittlung des energetischen solarthermischen und/oder photovoltaischen Potentials in bebauten Gebieten.

Die Solarenergie erweist sich zunehmend als wichtiges Standbein gegenwärtiger und zukünftiger Energieversorgung. Maßgebliche Gründe hierfür sind das unerschöpfliche Potential an Sonnenenergie, die Umweltfreundlichkeit und die Sicherheit dieser Technologie. Eine weitere Steigerung der Nutzung der Solarenergie wird daher weltweit angestrebt. In diesem Zusammenhang gilt es, das Potential an Installationsmöglichkeiten für solarthermische und photovoltaische Anlagen stetig zu verbessern. Die gegebenen Bedingungen, insbesondere was Gebäude und deren Dächer als Träger solcher Anlagen betrifft, sollen dabei in optimaler Weise ausgenutzt werden. Die Generierung dreidimensionaler Modelle von bebauten Gebieten mit den durch Femerkundungsverfahren erhobenen Daten ist derzeit noch mit einem erheblichen Bearbeitungsaufwand und entsprechend hohen Kosten verbunden. Grund hierfür ist, dass bisher keine automatisierten Verfahren existieren, mit denen in geeigneter Weise die Rohdaten in exakte geometrische Vektordaten umgewandelt werden können. Während einfache Stadtmodelle im LOD1-Format ("Klötzchenmodell") inzwischen für viele Kommunen vorliegen, befinden sich die genaueren LOD2- und LOD3-Modelle, die auch Schrägdachformen und Dachaufbauten berücksichtigen, derzeit noch im Aufbau und beschränken sich in der Regel auf besonders repräsentative Gebäude oder Stadtzentren.

Damit stellt sich der vorliegenden Erfindung die Aufgabe, ein sicheres, präzises und zugleich kostengünstiges Verfahren zur Ermittlung des energetischen solarthermischen und/oder photovoltaischen Potentials in bebauten Gebieten zu schaffen.

Diese Aufgabe wird dadurch gelöst, dass für das auszuwertende Gebiet Geometriedaten hinsichtlich Größe, Form, Anordnung, Ausrichtung, Neigung etc. einzelner Gebäude oder Gebäudeteile, der Vegetation und/oder der Topographie aus der Luft erfasst werden, dass die ermittelten Geometriedaten in einen Rechner eingelesen, ggf. aufbereitet und durch den Rechner dahingehend ausgewertet werden, wie die entsprechenden in dem auszuwertenden Gebiet vorhandenen Gebäude zur Aufnahme von Solar- und/oder Photovoltaikanlagen geeignet sind.

Das erfindungsgemäße Verfahren läuft dabei in mindestens drei Schritten ab. Zunächst wird das auszuwertende Gebiet durch Ermittlung der o. g. Geometriedaten in Form möglichst aller der Faktoren Größe der Dachflächen. Ausrichtung, Neigung, Verschattung der Dachfläche durch umliegende Objekte und mittlere ortsspezifische solare Einstrahlung auf eine ebene Fläche erfasst. Dabei wird in der Regel auf von Dritten ermittelte Daten zurückgegriffen. Diese werden dann in einem zweiten Schritt digital in einen Rechner eingelesen und ggf. so aufbereitet, dass sie in geeigneter Weise weiterverwendet werden können. Im Rahmen der elektronischen Datenverarbeitung werden die Daten dann automatisch dahingehend ausgewertet, inwiefern das entsprechende Gebiet und die dort befindlichen Gebäude zur Aufnahme von Solar- und/oder Photovoltaikanlagen geeignet sind. In die Datenverarbeitungsanlage werden also die ermittelten Daten eingelesen; Ergebnis der entsprechenden Berechnungen sind dann konkrete Angaben und Bewertungen für das auszuwertende Gebiet. Anhand dieser Ergebnisse können dann Solar- bzw. Photovoltaikanlagen gezielt an den optimalen Punkten in diesem Gebiet installiert werden, sodass eine besonders effektive Ausnutzung der Solarenergie erreicht werden kann.

Der genannte erste Schritt wird in einem separaten Verfahren, in der Regel von dritter Seite durchgeführt. Hierfür ist es besonders zweckmäßig, wenn die Geometriedaten aus einem Luftfahrzeug, wie einem Flugzeug oder Hubschrauber erfasst werden bzw. erfasst worden sind. Es kann ebenso auf im Rahmen des erfindungsgemäßen Verfahrens angefertigte Unterlagen zurückgegriffen werden. Im Gegensatz zu bisher bekannten Lösungen können statt realer Gebäude auch Modelle geplanter Bebauung eines Gebietes mit der erfindungsgemäßen Methode erfasst werden. Auf diese Weise können also solartechnische Aspekte bereits bei der Stadtplanung Berücksichtigung finden, indem auch Berechnungen der solaren Einstrahlung auf geplante Solaranlagen möglich sind.

Es gilt, die ermittelten geometrischen Daten digital in einen Rechner einzulesen. Hierzu ist es zweckmäßig, die Geometriedaten mittels Laser-Scanning und/oder Photogrammetrie auszuwerten. Das Laser-Scanning ist eine effektive Technologie zur Erfassung von räumlich hoch aufgelösten Höhenpunkten des Untergrundes. Auf Grundlage dieser Rohdaten können Gelände- und Stadtmodelle mit hoher Auflösung und Detailgenauigkeit generiert werden. Die hierfür notwendigen, so genannten LiDAR-Systeme sind in Flugzeugen oder Hubschraubern montiert. Im Rahmen photogrammetrischer Verfahren werden Lage und Form von Objekten anhand von photographischen Aufnahmen rekonstruiert. Durch die photogrammetrische Auswertung der Luftbilder ist es möglich, die gesamte aus dieser Perspektive sichtbare Topographie oder einzelne Objekte sowohl nach Lage als auch nach Höhe in digitaler Form zu erfassen und z. B. als dreidimensionales Modell darzustellen.

Bei der Analyse wird ggf. jedes einzelne Gebäude einer gesonderten automatischen Bewertung unterzogen. Genauer noch, die Dachflächen eines Gebäudes werden in Teilflächen segmentiert, deren Kantenabmessungen zwischen ca. 0,1 m und 1,0 m frei wählbar sind. Auf diese Weise entsteht ein Raster einzelner Teilflächen des Gebäudes oder Gebäudeteils, die nunmehr detailliert und exakt unter verschiedenen Kriterien berücksichtigt werden können.

Insbesondere ist daran gedacht, dass für jede Teilfläche eine Berechnung von Horizontlinien zur Berücksichtigung von Verschattung durch Gebäude oder Gebäudeteile, Topographie und/oder Vegetation durchgeführt wird. Diese Teilflächen bleiben dann auch bis zur späteren Aufsummierung der ermittelten Daten die relevante Rechengröße. Ermittelt wird dabei für die jeweilige Teilfläche die Horizontlinie mit Sonnenbahnen zu verschiedenen Jahreszeiten unter Berücksichtigung von Horizonteinschränkungen z. B. durch andere Gebäude, Gebäudeeinbauten und -einrichtungen, Vegetation oder durch die Topographie.

Ferner ist vorgesehen, dass die Werte der direkten, der diffusen und der Gesamt-Strahlung auf das auszuwertende Gebiet pro Zeiteinheit ermittelt werden. Diese Berechnung erfolgt unter Verwendung externer Strahlungsdaten, die die mittleren Strahlungsverhältnisse am Untersuchungsstandort repräsentieren. Hierdurch kommt gewissermaßen eine örtliche Komponente unabhängig von dem jeweiligen Gebäude hinzu, indem z.B. die jährliche Strahlung für das auszuwertende Gebiet in die Berechnung als Kenngröße einfließt. Dies geschieht unter Verwendung einer Zeitreihe mit repräsentativen Strahlungsdaten für direkte und diffuse Strahlung unter Berücksichtigung der tageszeitlich und jahreszeitlich wechselnden Sonnenposition in Bezug auf Azimut und Sonnenhöhe in einer wählbaren zeitlichen Auflösung von ca. 1 - 5 Minuten. Die Berechnungen des Strahlungspotentials erfolgen somit nicht statisch tabellarisch, sondern automatisch dynamisch durch zeitliche Integration unter realen Randbedingungen.

Nach Ermittlung der o. g. Einzelwerte ist es notwendig, dass ein Aufsummieren und eine Ausgabe der entsprechenden Ergebnisse pro Teilfläche durchgeführt wird, so dass die Ergebnisse transparent und leicht nachvollziehbar dargestellt werden können.

Der nächste Schritt sieht vor, dass eine Einteilung der erfassten Gebäude und/oder Gebäudeflächen in Eignungsklassen durchgeführt wird. Somit ist es dann im Rahmen der Auswertung auf vergleichsweise einfache Weise möglich, den erfassten Gebäuden bzw. Gebäudeflächen in dem zu bewertenden Gebiet eine Klassifizierung zuzuordnen und somit in präziser, standardisierter Form ein Schema zu finden, das die ermittelten Ergebnisse gut veranschaulicht.

Eine wesentliche Rolle bei der Ermittlung des energetischen solarthermischen oder photovoltaischen Potentials von Gebieten spielen Verschattungen durch das Gelände und die Vegetation. Verschattungen müssen detailliert bei der Entwicklung des Potentials berücksichtigt werden, zumal die Abschattung einer einzelnen Solarzelle gleichbedeutend mit der Abschattung aller in Serie geschalteten Zellen ist. Daher ist neben der jährlichen Strahlungsmenge auch die prozentuale Minderung der direkten Strahlung durch Verschattung von Bedeutung. Sie sollte möglichst gering bzw. nach Möglichkeit gar nicht vorhanden sein. Daher wird vorgeschlagen, dass zur Ermittlung der Verschattung die Generierung von Oberflächenmodellen der Vegetation auf Grundlage von Punktwolken durchgeführt wird. Diese Höhendaten in Rasterformat werden flächendeckend mit hoher räumlicher Auflösung z. B. aus Laserscan- oder Luftbildbefliegungen gewonnen.

Anschließend erfolgt eine Bewertung dieser Ergebnisse in der Form, dass die Bereiche, welche Vegetation aufweisen, durch Vergleich mit einem Geländemodell oder Verschneiden mit den Grundrissen der Gebäude aus den Höhendaten des Oberflächenmodelles extrahiert werden.

Alternativ können Verschattungseffekte von Vegetation durch einen geometrischen Ansatz bestimmt werden. Hierbei werden zur Ermittlung der Verschattung die xyz-Koordinaten des höchsten Punktes eines Baumes und mindestens ein zweiter Punkt auf einem Umring des Baumes erfasst und digitalisiert, zweckmäßigerweise des größten Umrings. Bereits diese zwei Daten reichen grundsätzlich aus, um in ausreichender Form auf die Geometrie des ganzen Baumes schließen zu können.

Dazu wird unter Berücksichtigung der Geländehöhe die Höhe des Baumes bestimmt und unter Symmetrieannahmen anhand dieser Daten die Baumgeometrie erfasst. Vorzugsweise wird am Mittelpunkt des Baumes dessen Höhe über Grund als Ausgangswert bestimmt. Hier kann beispielsweise von einem Rotationsellipsoid ausgegangen werden, sodass über den Rechner die Baumgeometrie abgebildet und für die Verschattung berücksichtigt werden kann. Die Horizontlinienbestimmung von Bäumen erfolgt für jede Teildachfläche analog zur Topographie durch Strahlverfolgung.

Eine weitere bevorzugte Ausführungsform der Erfindung sieht vor, dass die Eignung der Gebäude, Solar- und/oder Photovoltaikanlagen aufzunehmen, graphisch dargestellt wird. Die zuvor genannten Eignungsklassen oder eine sonstige Form der Charakterisierung werden also graphisch wiedergegeben.

Dies kann durch Kurven, Tabellen, Diagramme etc. veranlasst werden. Ein besonders geeigneter Vorschlag sieht aber vor, dass die Eignung der Gebäude, Solar- und/oder Photovoltaikanlagen aufzunehmen, in Form unterschiedlicher Farben graphisch dargestellt wird. Dabei kann z. B. auch auf Farben zurückgegriffen werden, wie sie aus Wetterberichten im Zusammenhang mit Temperaturen und Sonneneinstrahlung bekannt sind, sodass die Bewertungen leicht standardisiert werden können.

Schließlich ist vorgesehen, dass eine nachgeordnete Feinanalyse zur optimalen Anlagenpositionierung und -dimensionierung unter Berücksichtigung von Gebäude- oder Umgebungsdetails durchgeführt wird. Hierbei werden geometrische Details des Gebäudes, etwa in Form von Bauten wie Antennen, Gauben, Kaminen etc. und der Umgebung in Form Bäumen, Masten etc. berücksichtigt.

Die Erfindung zeichnet sich insbesondere dadurch aus, dass mit dem erfindungsgemäßen Verfahren eine besonders präzise und kostengünstige Analyse des solaren Energiepotentials auf städtischen Dächern durch numerische Simulationsrechnungen möglich ist. Auf Grundlage der ermittelten Daten lassen sich energetische Erträge durch Photovoltaik oder solarthermische Anlagen quantifizieren, sodass eine schnelle, genaue und dennoch großräumige Abschätzung des ökologisch und wirtschaftlich sinnvollen Einsatzes des solaren Energiepotentials möglich ist. Die Ergebnisse des erfindungsgemäßen Verfahrens bieten eine fundierte Datengrundlage für eine zielgerichtete und effiziente Vermarktung solartechnischer Anlagen. Als externe Eingangsdaten werden dreidimensionale Geometriedaten von Gebäuden und Gebäudeteilen und der Vegetation benötigt. Diese Geometriedaten werden genutzt, um für städtische Ballungsräume in hoher räumlicher Auflösung das energetische Potential auf den einzelnen Dachflächen, eingeteilt in kleine Raster, zu berechnen. Hierbei werden repräsentative Strahlungsdaten in Form einer Zeitreihe und die zeitlich und räumlich wechselnde Verschattung durch Gelände, Gebäude und Vegetation berücksichtigt. Auf Grundlage dieser Eingangsdaten werden automatisch durch ein Programm in hoher und zeitlicher Auflösung die Jahressummenwerte der diffusen, der direkten und der Gesamt-Strahlung auf den Dächern des Untersuchungsraumes bestimmt. Die errechneten und dann in unterschiedlichster Form ausgegebenen Ergebnisse können z. B. auf einer kommunalen Internetplattform dargestellt werden. Hierbei werden die Dachflächen nach der Menge der jährlichen Einstrahlung in Eignungsklassen eingeteilt, sodass eine Darstellung der Einschätzung des möglichen Solarpotentials in einfacher und präziser Weise ermöglicht ist.

Der Anwendungsbereich der vorliegenden Erfindung erstreckt sich auf stadtweite Solarpotential-, Detailanalysen und Anlagenplanung. Bei erstgenannter Analyse erfolgen auf der Grundlage von dreidimensionalen Stadtmodellen erste Bewertungen potentieller Anlagenstandorte. Detailanalysen erfolgen auf Grundlage detaillierter dreidimensionaler Modelle für Einzelgebäude oder Gebäudeensembles, z. B. Liegenschaften eines Immobilienunternehmens. Mit diesen Analysen können die optimalen, wenig verschatteten Dachflächenbereiche bestimmt werden. Sie bieten eine wichtige Planungsgrundlage bei der Anlagendimensionierung und einer ersten Ertragsprognose. Auch detaillierte Analysen der jährlichen solaren Einstrahlung auf geplante Flächen von Solaranlagen können durchgeführt werden. Neben Aufdachanlagen können auch fassadenintegrierte Systeme und Freiflächenanlagen untersucht werden. Die Ergebnisse dienen der funktionalen und wirtschaftlichen Optimierung der Anlagen, auch unter Aspekten der Ertragsprognose und damit der Finanzierung derartiger Anlagen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: die Erfassung der Geometriedaten per Flugzeug,
- Figur 2: eine Darstellung zur Eignung von Dachflächen,
- Figur 3: das Strahlungsangebot für den Teilbereich einer Stadt,
- Figur 4: die Darstellung aus Figur 3 aus anderer Perspektive,
- Figur 5: die Detailanalyse eines einzelnen Gebäudes,
- Figur 6: eine Veranschaulichung der Segmentierung eines Daches in Teilfläche,
- Figur 7: die Horizontlinien für einen ersten Dachaufpunkt,
- Figur 8: die Horizontlinie für einen zweiten Dachaufpunkt,
- Figur 9: die Darstellung eines Daches unter Berücksichtigung der Verschattung und
- Figur 10: die Darstellung eines Baumes zwecks Erfassung der Verschattung.

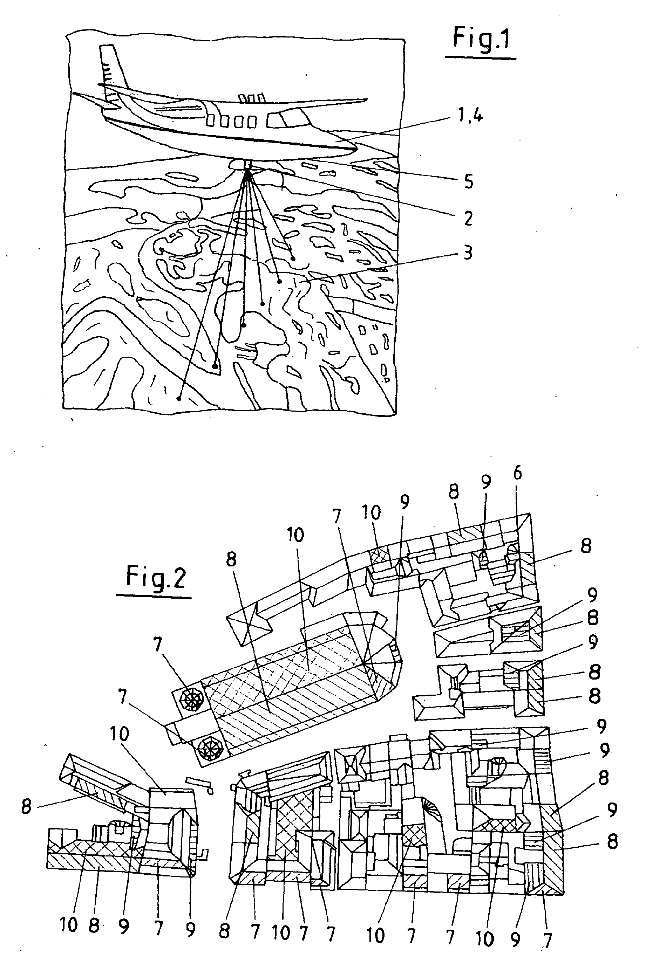

Figur 1 zeigt schematisch das Erfassen der Geometriedaten. Ein Luftfahrzeug 4, hier ein Flugzeug 1, überfliegt ein bebautes Gebiet 3. Dabei werden mittels des Laser-Scanners 2 an der Unterseite 5 des Flugzeugs 1 die Geometriedaten erfasst.

In Figur 2 ist der Ausschnitt 6 eines bebauten Gebietes näher dargestellt. Erkennbar ist eine Vielzahl von Gebäuden. Diese sind entsprechend ihrer Eignung zur Aufnahme von solarthermischen oder photovoltaischen Anlagen bereits qualifiziert. Es handelt sich also gewissermaßen um das Endprodukt des erfindungsgemäßen Verfahrens, bei dem in besonders gut nachvollziehbarer Weise die Eignung zur Aufnahme der Anlagen graphisch dargestellt ist. Hierzu weisen die Gebäude als Ganzes oder abschnittsweise entsprechende Markierungen in unterschiedlicher Helligkeitsstufe auf. Die besonders dunklen Abschnitte sind sämtlich mit dem Bezugszeichen 7 versehen und entsprechen einer sehr guten Eignung. Mit dem Bezugszeichen 8 sind zumindest gut geeignete Flächen bezeichnet und etwas heller dargestellt. Das Bezugszeichen 9 steht für bedingt geeignete, noch heller wiedergegebene Flächen. Das Bezugszeichen 10 schließlich charakterisiert Flächen, die nicht für die Anordnung von solarthermischen oder photovoltaischen Anlagen geeignet sind.

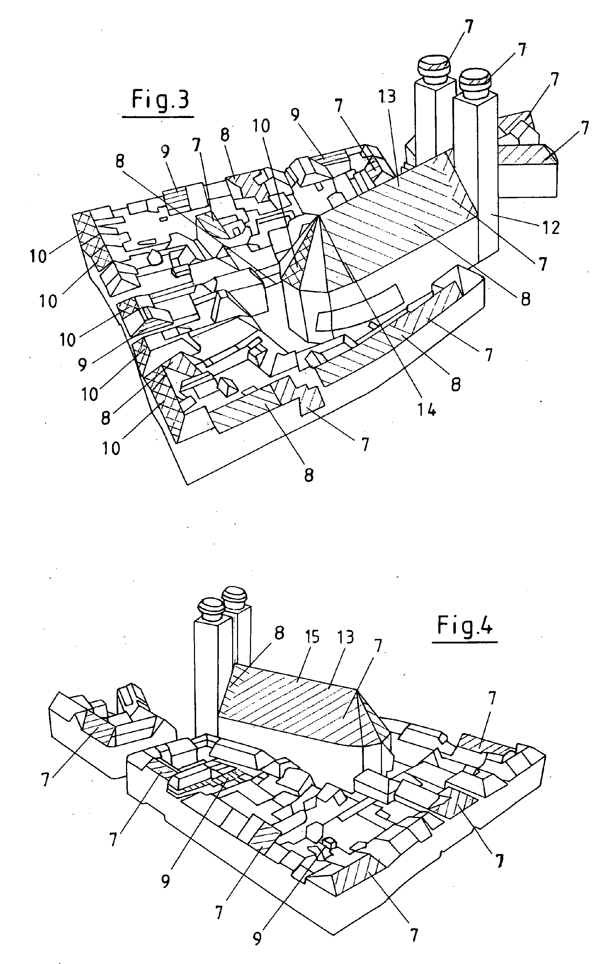

Eine vergleichbare Darstellung in dreidimensionaler Form zeigen die Figuren 3 und 4. Wiederum sind besonders gut geeignete Fläche oder Teilflächen mit dem Bezugszeichen 7, gut geeignete Flächen mit dem Bezugszeichen 8, bedingt geeignete Flächen mit dem Bezugszeichen 9 und nicht geeignete Flächen mit dem Bezugszeichen 10 versehen. Sehr anschaulich wird hierbei einerseits, dass die Perspektive aus Figur 3 der Sonnenseite mit weitgehender Südausrichtung und die Perspektive in Figur 4 der Schattenseite in erster Linie mit Nordausrichtung entspricht. Plakativ ist dabei auch das mit dem Bezugszeichen 12 versehene Gebäude in Form einer Kirche. Anhand deren Dach 13 allein wird gut deutlich, wie sinnvoll auch die Segmentierung einzelner Gebäudeteile ist. Markant ist dabei, dass die Dachseite 14 aus Figur 3 besonders, die gegenüberliegende Dachseite 15 aus Figur 4 hingegen überhaupt nicht zur Aufnahme der entsprechenden Anlagen geeignet ist.

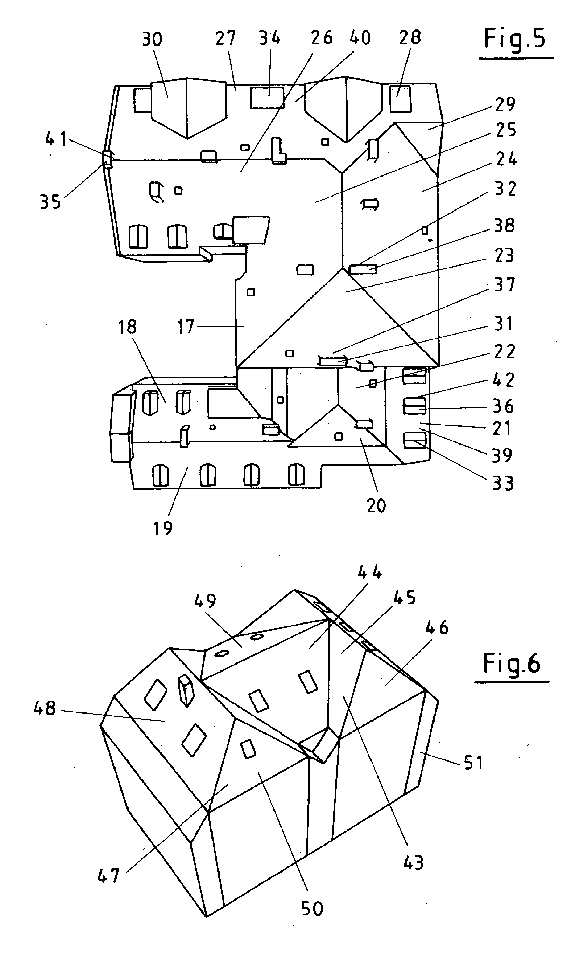

Ein einzelnes Gebäude 16 mit einer Vielzahl von beispielhaft mit dem Bezugszeichen 18 bis 30 bezeichneten Dachflächen ist in Figur 5 dargestellt. Gut erkennbar sind dabei neben hell dargestellten und damit besonders gut geeigneten Dachflächen 23, 20, 19, gut geeignete Dachflächen 26, 24, 22, bedingt geeigneten Dachflächen 21, 29, 30 auch ungeeignete Dachflächen 18, 27. Veranschaulicht ist dabei auch, dass sich besonders geeignete Teilflächen herausbilden können, die hier in der Nähe von Einbauten 31 bis 36 mit den Bezugszeichen 37 bis 42 bezeichnet sind. Dabei handelt es sich um Einbauten wie einen Schornstein 31, 32, eine Gaube 33, 34, einen Schornstein 35 oder wiederum eine Gaube 36. Die hier besonders dunkel markierten Abschnitte sind besonders schlecht zur Aufnahme von solarthermischen oder photovoltaischen Anlagen geeignet.

Wie detailliert die Einteilung eines Gebäudes erfolgt, veranschaulicht Figur 6 mit dem Gebäude 51. Unterschiedliche Dachflächen 43 bis 49 sind entsprechend ausgebildet und mit einem detaillierten Raster überzogen, von dem hier beispielhaft ein Dachaufpunkt mit dem Bezugszeichen 50 versehen ist.

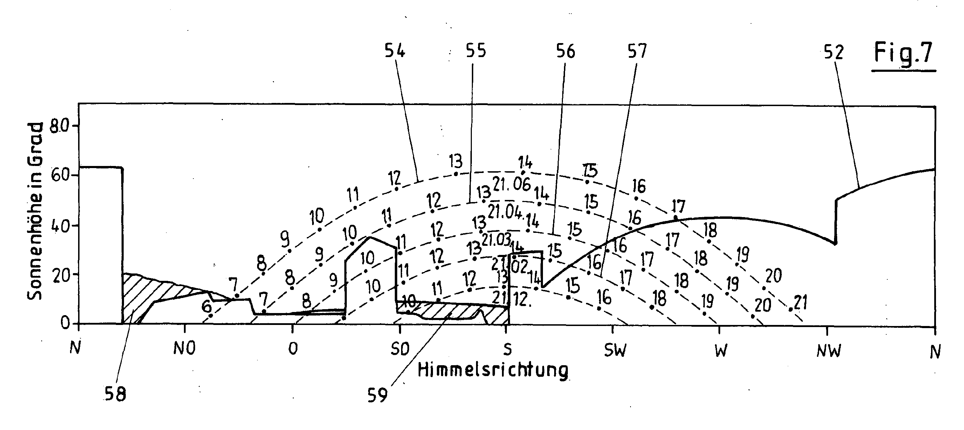

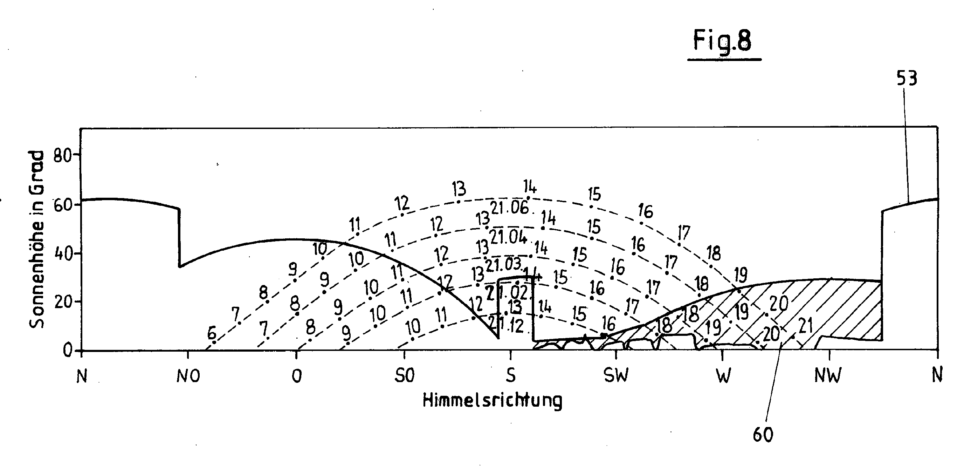

Die Figuren 7 und 8 veranschaulichen für zwei Dachaufpunkte die Verschattung durch Gebäude und Topographie. Das Ausmaß der Verschattung im Tages- und Jahresverlauf wird anhand der Horizontlinien 52, 53 bestimmt. Die Linien 52, 53 legen fest, wann - hier über die Zeiteinheit Jahr - eine direkte Sonneneinstrahlung auf den jeweiligen Aufpunkt in Abhängigkeit von der Stellung der Sonne (Himmelsrichtung, Sonnenhöhe) stattfindet. Die Himmelsrichtung ist auf der x-Achse, die Sonnenhöhe in Grad auf der y-Achse dargestellt. Die Kreisbögen, von denen hier vier beispielhaft mit dem Bezugszeichen 54 bis 57 für die Monate Februar, März, April und Juni versehen sind, symbolisieren die Höhe der Sonne im Tagesverlauf (Sonnenbahnen). Von besonderem Interesse sind die Bereiche 58 und 59 in Figur 7 und der Bereich 60 in Figur 8, jeweils schwarz wiedergegeben. Hier liegt jeweils eine Horizonteinschränkung durch die Topographie vor. Sämtliche andere, grau dargestellten Horizontlinien zeichnen sich dadurch aus, dass hier eine Horizonteinschränkung durch andere Gebäude oder Gebäudeteile vorliegt. In den Zeiten, in denen die Sonnenbahnen über der Horizontlinie des betreffenden Dachpunktes liegen, kann eine direkte Sonneneinstrahlung erfolgen. Eine Abschattung der direkten Sonnenstrahlung findet zu den Zeiten statt, in denen die Sonnenbahn unter der Horizontlinie verläuft.

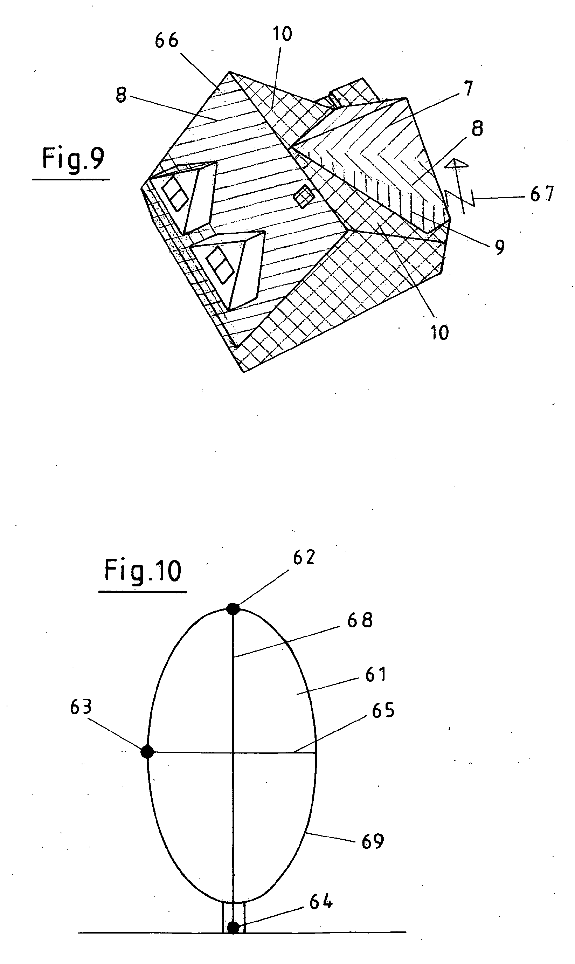

In Figur 9 ist ein weiteres Dach 66 dargestellt, bei dem insbesondere die Verschattung durch hier nicht gezeigte Vegetation berücksichtigt ist. Die Abbildung gemäß Figur 9 spiegelt den Einfluss der berücksichtigten Faktoren auf die Einstrahlung wieder. Es lassen sich deutliche Unterschiede zwischen nördlich ausgerichteten, allenfalls noch bedingt geeigneten Bereichen 9 und stark verschatteten, nicht geeigneten Bereichen 10 erkennen. Unverschattete, südlich exponierte Flächen sind mit dem Bezugszeichen 8 versehen. Mit dem Pfeil 67 ist die Himmelsrichtung Norden bezeichnet. Solche Verschattungseffekte können z. B. durch umliegende Gebäude, Bäume oder Gauben verursacht werden. Die Berücksichtigung der Verschattung ist vor allem von besonderer Bedeutung, weil eine teilweise Verschattung eines Solarmoduls zu einem Leistungsabfall der gesamten Anlage führt.

Schließlich zeigt Figur 10 die grob vereinfachte Darstellung eines Baumes 61 als Ergebnis der Berechnung. Die Geometrie des Baumes 61 wird dabei durch den höchsten Punkt 62 und den Punkt 63 auf dem größten Umring 65 des Baumes 61 ermittelt. Bekannt ist ferner die Geländehöhe am Fußpunkt 64 des Baumes 61, sodass die Höhe des Baumes 61 über Grund bestimmt werden kann. Durch Symmetrieannahmen in Form des hier gezeigten Rotationsellipsoids 69 kann durch das Rechenprogramm dann die Baumgeometrie abgebildet und für die Verschattung berücksichtigt werden.

## Patentansprüche

1. Verfahren zur Ermittlung des energetischen solarthermischen und/oder photovoltaischen Potentials in bebauten Gebieten,
**dadurch gekennzeichnet,**
**dass** für das auszuwertende Gebiet Geometriedaten hinsichtlich Größe, Form, Anordnung, Ausrichtung, Neigung etc. einzelner Gebäude oder Gebäudeteile, der Vegetation und/oder der Topographie aus der Luft erfasst werden, dass die ermittelten Geometriedaten in einen Rechner eingelesen, ggf. aufbereitet und durch den Rechner dahingehend ausgewertet werden, wie die entsprechenden in dem auszuwertenden Gebiet vorhandenen Gebäude zur Aufnahme von Solar- und/oder Photovoltaikanlagen geeignet sind.

2. Verfahren nach Anspruch 1,
**dadurch gekennzeichnet,**
**dass** die Geometriedaten aus einem Luftfahrzeug erfasst werden.

3. Verfahren nach Anspruch 1,
**dadurch gekennzeichnet,**
**dass** die Geometriedaten mittels Laser-Scanning und/oder Photogrammetrie ausgewertet werden.

4. Verfahren nach Anspruch 1,
**dadurch gekennzeichnet,**
**dass** die Dachflächen eines Gebäudes in Teilflächen segmentiert werden.

5. Verfahren nach Anspruch 4,
**dadurch gekennzeichnet,**
**dass** für jede Teilfläche eine Berechnung von Horizontlinien zur Berücksichtigung von Verschattung durch Gebäude oder Gebäudeteile, Topographie und/oder Vegetation durchgeführt wird.

6. Verfahren nach Anspruch 1,
**dadurch gekennzeichnet,**
**dass** die Summenwerte der Strahlung auf das auszuwertende Gebiet pro Zeiteinheit erfasst werden.

7. Verfahren nach Anspruch 1,
**dadurch gekennzeichnet,**
**dass** die Berechnung der potentiellen und der tatsächlichen Einstrahlung unter Berücksichtigung zeitlich wechselnder Sonnenstände und Strahlungswerte durchgeführt wird.

8. Verfahren nach Anspruch 4,
**dadurch gekennzeichnet,**
**dass** ein Aufsummieren und eine Ausgabe der entsprechenden Ergebnisse pro Teilfläche durchgeführt wird.

9. Verfahren nach Anspruch 1,
**dadurch gekennzeichnet,**
**dass** eine Einteilung der erfassten Gebäude und/oder Gebäudeflächen in Eignungsklassen durchgeführt wird.

10. Verfahren nach Anspruch 1,
**dadurch gekennzeichnet,**
**dass** zur Ermittlung der Verschattung die Generierung von Oberflächenmodellen der Vegetation auf Grundlage von Punktwolken durchgeführt wird.

11. Verfahren nach Anspruch 10,
**dadurch gekennzeichnet,**
**dass** die Bereiche, welche Vegetation aufweisen, durch Vergleich mit einem Geländemodell und Verschneiden mit den Grundrissen der Gebäude extrahiert werden.

12. Verfahren nach Anspruch 1,
**dadurch gekennzeichnet,**
**dass** zur Ermittlung der Verschattung die xyz-Koordinaten des höchsten Punktes eines Baumes und mindestens ein zweiter Punkt auf einem Umring des Baumes erfasst werden.

13. Verfahren nach Anspruch 12,
**dadurch gekennzeichnet,**
**dass** unter Berücksichtigung der Geländehöhe die Höhe des Baumes bestimmt wird und dass unter Symmetrieannahmen anhand dieser Daten die Baumgeometrie erfasst wird.

14. Verfahren nach Anspruch 1,
**dadurch gekennzeichnet,**
**dass** die Eignung der Gebäude, Solar- und/oder Photovoltaikanlagen aufzunehmen, graphisch dargestellt wird.

15. Verfahren nach Anspruch 14,
**dadurch gekennzeichnet,**
**dass** die Eignung der Gebäude, Solar- und/oder Photovoltaikanlagen aufzunehmen, in Form unterschiedlicher Farben graphisch dargestellt wird.

16. Verfahren nach Anspruch 1,
**dadurch gekennzeichnet,**
**dass** eine nachgeordnete Feinanalyse zur optimalen Anlagenpositionierung und -dimensionierung unter Berücksichtigung von Gebäude- oder Umgebungsdetails durchgeführt wird.
